(19) Europäisches Patentamt
European Patent Office
Office européen des brevets

(11) **EP 2 299 581 A2**

(12) **EUROPÄISCHE PATENTANMELDUNG**

(43) Veröffentlichungstag:
**23.03.2011 Patentblatt 2011/12**

(51) Int Cl.:
***H02M 5/00*** *(2006.01)*      ***H02M 7/00*** *(2006.01)*

(21) Anmeldenummer: **10169953.6**

(22) Anmeldetag: **19.07.2010**

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(30) Priorität: **08.09.2009   AT 14042009**

(71) Anmelder: **SIEMENS AKTIENGESELLSCHAFT**
**80333 München (DE)**

(72) Erfinder:
• **Trnka, Alexander**
**2201, Gerasdorf bei Wien (AT)**

• **Damec, Vladislav**
**691 43, Hlohovec (CZ)**
• **Reischer, Wilhelm**
**1210, Wien (AT)**

(74) Vertreter: **Maier, Daniel Oliver**
**Siemens AG**
**Postfach 22 16 34**
**80506 München (DE)**

Bemerkungen:
Diese Anmeldung ist am 19-07-2010 als Teilanmeldung zu der unter INID-Code 62 erwähnten Anmeldung eingereicht worden.

(54)   **Frequenzumrichteranordnung**

(57)   Die Erfindung betrifft einen Frequenzumrichteranordnung für einen Vierquadrantenbetrieb mit einem ersten Stromrichter (SR1), wenigstens einem zweiten Stromrichter (SR2) und einem gemeinsamen Zwischenkreis (ZK), wobei ein erstes Modul (M1) vorgesehen ist, das aus dem ersten Stromrichter (SR1) mit zugeordneten ersten Zwischenkreiskomponenten (ZK1) gebildet ist, wobei ein zweites Modul (M2) vorgesehen ist, das aus dem zweiten Stromrichter (SR2) mit zugeordneten zweiten Zwischenkreiskomponenten (ZK2) gebildet ist und wobei die ersten Zwischenkreiskomponenten (ZK1) und die zweiten Zwischenkreiskomponenten (ZK2) mittels Verbindungselemente (V) zu dem gemeinsamen Zwischenkreis (ZK) zusammengeschlossen sind.

FIG 1

EP 2 299 581 A2

**Beschreibung**

**Beschreibung**

Die Erfindung betrifft eine Frequenzumrichteranordnung für einen Vierquadrantenbetrieb mit einem ersten Stromrichter, wenigstens einem zweiten Stromrichter und einem gemeinsamen Zwischenkreis.

Frequenzumrichter für einen Vierquadrantenbetrieb, auch Vierquadrantenumrichter genannt, werden beispielsweise zum drehzahlvariablen Betrieb von Windkraftanlagen oder Drehzahlveränderbare Antriebe eingesetzt. Die Windturbine bzw. anzutreibende Einrichtung ist dabei in der Regel an eine Asynchronmaschine gekoppelt, welche als Generator oder als Motor betrieben werden kann. Dabei ist maschinenseitig ein erster Stromrichter vorgesehen, welcher im generatorischen Betrieb als gesteuerter Gleichrichter und im motorischen Betrieb als Wechselrichter arbeitet. Netzseitig ist ein zweiter Stromrichter angeordnet, welcher im generatorischen Betrieb als Wechselrichter arbeitet und Strom in ein angeschlossenes Netz einspeist. Im motorischen Betrieb arbeitet der zweite Stromrichter als Gleichrichter.

Verbunden sind die beiden Stromrichter über einen Spannungszwischenkreis, welcher mit Kondensatoren ausgebildet ist. Für Windkraftanlagen kleiner und mittlerer Leistung werden üblicherweise Spannungszwischenkreisumrichter herangezogen. Die erforderlichen hohen Zwischenkreiskapazitäten werden beispielsweise mittels Elekrolytkondensatoren erreicht. Solche Kondensatoren sind jedoch temperaturempfindlich und in ihrer Lebensdauer beschränkt.

Beschrieben ist ein Vierquadrantenumrichter für Windkraftanlagen beispielsweise in der DE 10 2004 003 657 A1. Sowohl ein generator- wie auch ein netzseitiger Stromrichter bestehen aus jeweils drei Halbbrückenschaltungen, welche wiederum aus je einem oberen und einem unteren Leistungshalbleiterschalter mit jeweils antiparalleler Freilaufdiode gebildet sind. Die Leistungshalbleiterschalter werden in der Regel pulsbreitenmoduliert, wobei die Schaltfrequenz die ein Vielfaches der Netzfrequenz ausmacht.

Ein Frequenzumrichter ohne Elektrolytkondensatoren ist aus der EP 2 003 770 A2 bekannt, wobei der Zwischenkreis einen durch eine Drossel und einen kleinen Kondensator gebildeten Reihenschwingkreis enthält. Die Komponenten des Zwischenkreises sind in der Weise dimensioniert, dass eine Resonanzfrequenz des Zwischenkreises zwischen den höchsten netzseitigen und den niedrigsten wechselrichterseitigen Anregungsfrequenzen liegt. Dieser Frequenzumrichter ist jedoch nur für einen Zweiquadrantenbetrieb vorgesehen. Zudem ist eine Geräteskalierung schwierig, weil für jeden Gerätetyp die Drossel und der Kondensator genau aufeinander abgestimmt werden müssen, damit die sich ergebende Resonanzfrequenz nicht in die Nähe einer Anregungsfrequenz liegt.

Der Erfindung liegt die Aufgabe zugrunde, für eine Frequenzumrichteranordnung der eingangs genannten Art eine Verbesserung gegenüber dem Stand der Technik anzugeben.

Erfindungsgemäß wird diese Aufgabe gelöst durch eine Frequenzumrichteranordnung gemäß Anspruch 1. Dabei ist ein erstes Modul vorgesehen, das aus dem ersten Stromrichter mit zugeordneten ersten Zwischenkreiskomponenten gebildet ist. Des Weiteren ist ein wenigstens zweites Modul vorgesehen, das aus dem zweiten Stromrichter mit zugeordneten zweiten Zwischenkreiskomponenten gebildet ist. Die ersten Zwischenkreiskomponenten und die zweiten Zwischenkreiskomponenten sind mittels Verbindungselemente zu dem gemeinsamen Zwischenkreis zusammengeschlossen.

Eine derartige Lösung erlaubt eine flexible Auslegung einer Frequenzumrichteranordnung für verschiedene Einsatzfälle, wobei verschiedene erste und zweite Module den Anforderungen entsprechend kombiniert werden können. Jedes Modul bildet für sich eine eigene Leistungsbaugruppe mit einem Verbindungsanschluss zum Zusammenschließen mit anderen Modulen. Verschiedene Frequenzumrichteranordnungen werden demnach durch das Zusammenschließen verschiedener Module gebildet, ohne dabei die Module baulich zu verändern. Neben den Anschlüssen zum Zusammenschließen weist jedes Modul Schnittstellen zur Verbindung mit einer Gerätesteuerung auf, wobei die Steuerung entsprechend der kombinierten Module eingerichtet bzw. programmiert ist.

Zum Beispiel können unterschiedliche Leistungsklassen durch unterschiedliche Kombinationen von ersten und zweiten Modulen zusammengestellt werden, wobei nur die Gestaltung der Verbindungselemente in der Weise angepasst werden müssen, dass die Eigenfrequenz des gemeinsamen Zwischenkreises einen ausreichenden Abstand zu den Anregungsfrequenzen der Frequenzumrichteranordnung aufweist. Die Erfindung ist dabei nicht auf eine Anordnung mit nur einem ersten und einem zweiten Modul beschränkt. Die gewünschte Flexibilität kann dadurch erhöht werden, dass beispielsweise ein maschinenseitiges Modul mit zwei oder mehreren netzseitigen Modulen über die Verbindungselemente zu einer Frequenzumrichteranordnung kombiniert werden.

Durch die Ausgestaltung der Verbindungselemente wird die Eigenfrequenz des gemeinsamen Zwischenkreises variiert. Höherinduktive Verbindungen führen dabei zu einer Absenkung der Eigenfrequenz des Zwischenkreises. Die Schaltfrequenz des Stromrichters wird in diesem Fall höher als die sich ergebende Eigenfrequenz des Zwischenkreises gewählt.

Günstiger ist es, die Verbindung so auszuführen, dass die Eigenfrequenz immer über der höchsten Anregungsfrequenz liegt. Um eine besonders hohe Eigenfrequenz zu erreichen, ist in einer Weiterentwicklung der Erfindung vorgesehen, dass die Verbindungselemente als eine niederinduktive Verschienung ausgeführt sind. Die Verschienung weist dabei großflächige Kontaktflächen auf, welche voneinander elektrisch isoliert sind.

Die damit erreichte hohe Zwischenkreis-Eigenfrequenz bewirkt, dass eine niedrigere Schaltfrequenz noch immer ausreichend hoch ist, um eine wirtschaftliche Dimensionierung netzseitiger Filterkomponenten sicherzustellen. Dabei ist zu beachten, dass die maßgebliche Anregungsfrequenz der doppelten Schaltfrequenz entspricht, weil der Schwingkreis bei steigender und fallender Flanke innerhalb einer Periode der Schaltfrequenz angeregt wird.

Von Vorteil ist es, wenn die kapazitiven Zwischenkreiskomponenten als Folienkondensatoren ausgebildet sind. Diese weisen eine wesentlich längere Lebensdauer und eine geringere Temperatur- und Frequenzabhängigkeit als Elektrolytkondensatoren auf. Ein Vorteil der Folienkondensatoren liegt zudem in den geringen ohmschen Verlusten und in geringen parasitären Induktivitäten. Damit wird die Gesamtinduktivität des Zwischenkreises sehr klein gehalten und die Eigenfrequenz liegt ausreichend hoch über der maximalen Anregungsfrequenz.

Vorteilhaft ist der Einsatz von Polypropylen-Folienkondensatoren, welche aufgrund eines niedrigen Verlustfaktors einen Zwischenkreis großer Güte und damit einen hohen Wirkungsgrad der Frequenzumrichteranordnung bewirken. Die Resonanzfrequenz des Zwischenkreises muss dabei deutlich über der höchsten Anregungsfrequenz des Umrichters liegen, da entsprechend der großen Güte nur eine minimale Dämpfung gegeben ist. Im Vergleich zu Elektrolytkondensatoren ist jedoch bei Folienkondensatoren die Kapazität pro Volumseinheit geringer. Bei gleichem Volumen ergibt sich daher eine um ca. ein Drittel niedrigere Gesamtzwischenkreiskapazität. Bei Verwendung von Elektrolytkondensatoren reicht aufgrund der höheren Zwischenkreiskapazität eine Standardkabelverbindungen mit geringer Induktivität als Zwischenkreisverbindung aus, um die Resonanzfrequenz auf ausreichend niedrige Werte zu senken und damit einen erheblichen Abstand zu den höheren Schaltanregungsfrequenzen zu erreichen.

Bei der Verwendung von Folienkondensatoren liegt bei einer Standartkabelverbindung der Resonanzpunkt im Vergleich zu einem Elektrolytkondensatorzwischenkreis höher. Um mit dem Resonanzpunkt nicht in die Nähe der Anregungsfrequenz zu kommen, werden die Verbindungselemente niederinduktiv verbunden, sodass die Resonanzfrequenz des Zwischenkreises wesentlich höher als die Anregungsfrequenz liegt. Damit werden große und schwere Induktivitäten im Zwischenkreis vermieden. Diese wären erforderlich, um bei einem Einsatz von Folienkondensatoren die Resonanzfrequenz unterhalb der Anregungsfrequenz zu halten.

Eine weitere Verbesserung der Erfindung sieht vor, die ersten Zwischenkreiskomponenten eine erste Kondensatoreinheit, eine erste negative Zwischenkreisschiene und eine erste positive Zwischenkreisschiene umfassen, dass die zweiten Zwischenkreiskomponenten eine zweite Kondensatoreinheit, eine zweite negative Zwischenkreisschiene und eine zweite positive Zwischenkreisschiene umfassen, dass die negativen Zwischenkreisschienen mittels eines negativen Verschienungsabschnitts verbunden sind, dass die positiven Zwischenkreisschienen mittels eines positiven Verschienungsabschnitts verbunden sind und dass die beiden Verschienungsabschnitte mit einer dazwischen angeordneten Isolierschicht einander flächig angenähert sind. Die niederinduktive Verschienung ist auf diese Weise sehr einfach und kostengünstig gestaltet. Die Zwischenkreisschienen sind dabei ebenfalls mittels niederinduktiver Verschienungen mit den Schaltelementen der Stromrichter verbunden. Diese sind in der Regel als IGBTs ausgebildet.

Um Module flexibel miteinander zu verbinden ist es von Vorteil, wenn der negative Verschienungsabschnitt als eine negative Verbindungsschiene ausgebildet ist, welche mit der ersten negativen Zwischenkreisschiene und der zweiten negativen Zwischenkreisschiene kontaktiert ist und wenn der positive Verschienungsabschnitt als eine positive Verbindungsschiene ausgebildet ist, welche mit der ersten positiven Zwischenkreisschiene und der zweiten positiven Zwischenkreisschiene kontaktiert ist. Die Verbindungsschienen sind dabei an die Form und Lage der Zwischenkreisschienen angepasst, sodass die Zwischenkreisschienen keine speziell geformten Verschienungsabschnitte zum Zusammenschließen der Zwischenkreiskomponenten aufweisen müssen.

Günstig ist es in jedem Fall, wenn die Zwischenkreisschienen und die Verbindungsschienen mittels mehrerer Verschraubungen zu einer kompakten Verschienung verbunden sind. Dabei verbindet eine Gruppe von Verschraubungen die negativen Zwischenkreisschienen mit der negativen Verbindungsschiene und eine andere Gruppe von Verschraubungen verbindet die positiven Zwischenkreisschienen mit der positiven Verbindungsschiene. Eine Verbindungsschiene weist im Bereich der Verschraubungen der anderen Verbindungsschiene Durchbrüche auf, sodass die Isolierung der beiden Verbindungsschienen nicht unterbrochen ist.

Eine Vielzahl von Verschraubungen stellt sicher, dass der Stromfluss auf mehrere Kontaktbereiche aufgeteilt ist. Die Wärmeentwicklung in der Verschienung infolge von Leitungsverlusten wird auf diese Weise niedrig gehalten.

Zur Aufteilung des Stromes auf mehrere Strompfade ist es zudem von Vorteil, wenn jede Kondensatoreinheit aus mehreren Kondensatoren aufgebaut ist. Die Kondensatoren sind dabei gleichmäßig verteilt auf den Zwischenkreisschienen angeordnet, um Stromspitzen in den Schienen zu vermeiden. Eine gute Kontaktierung ist sichergestellt, wenn die Kondensatoren mittels Schraubterminals auf den Zwischenkreisschienen befestigt sind.

Hochfrequente Anteile des Stromes, hervorgerufen durch steile Flanken eines Schaltsignals, können in den Zwischenkreisschienen aufgrund des sogenannten Skin-Effekts zu Verlusten führen. Deshalb ist es günstig, wenn die Zwischenkreisschienen als laminierte Schienen ausgeführt sind. Eine Schiene besteht dann aus mehreren übereinander geschichteten dünnen Kupferblechen, welche voneinander isoliert sind. Aus mechanischen Gründen wird die Schichtdicke der Isolierschichten sehr dünn gewählt.

Zur besseren Kontaktierung der einzelnen Lagen Kupferbleche ist es günstig, wenn diese vernickelt sind. Eine weitere Verringerung von Übergangswiderständen wird durch Verschweißen im Bereich der Kontaktierungen erreicht.

Die Erfindung wird nachfolgend in beispielhafter Weise unter Bezugnahme auf die beigefügten Figuren erläutert. Es zeigen in schematischer Darstellung:

Fig. 1    Blockschaltbild einer erfindungsgemäßen Anordnung

Fig. 2    Ersatzschaltbild des Zwischenkreisschwingkreises

Fig. 3    Aufsicht einer Frequenzumrichteranordnung mit niederinduktiver Verschienung des Zwischenkreises

Fig. 4    Detail D der Ansicht gemäß Fig. 3

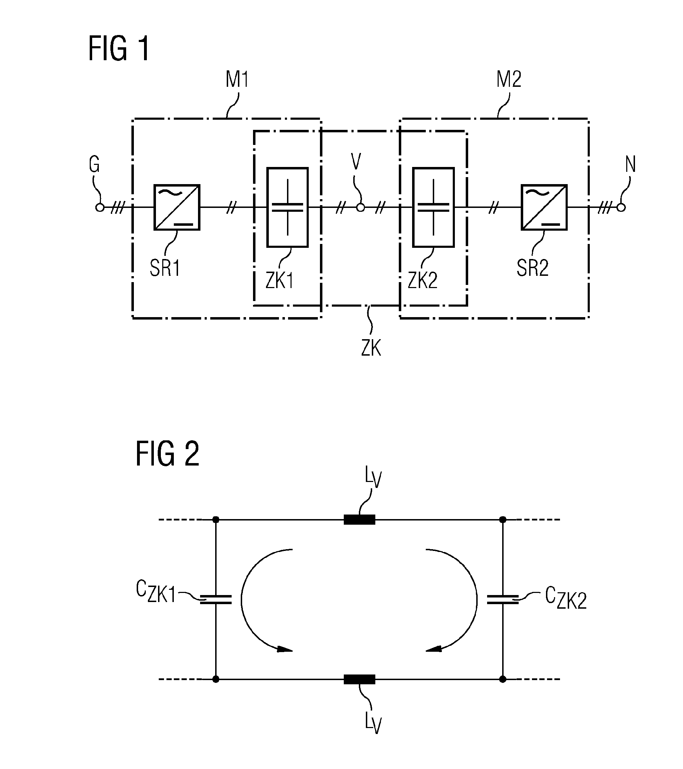

In Fig. 1 sind zwei Module M1, M2 dargestellt, welche mit Verbindungselementen V zu einer Frequenzumrichteranordnung zusammengeschlossen sind. Das erste Modul M1 umfasst einen ersten Stromrichter SR1 und erste Zwischenkreiskomponenten ZK1. Das zweite Modul M2 umfasst einen zweiten Stromrichter SR2 und zweite Zwischenkreiskomponenten ZK2. Jedes Modul M1, M2 ist somit als eine für sich funktionsfähige Leistungsbaugruppe ausgebildet. Die beiden Leistungsbaugruppen sind an Verbindungsanschlüssen miteinander verbunden, sodass die Zwischenkreiskomponenten ZK1, ZK2 einen gemeinsamen Zwischenkreis ZK bilden.

Ein solcher Aufbau dient in der Regel zum Anschließen eines Generators G an ein Stromnetz N. Bei einem Drehstromsystem sind drei Phasen des Generators G mit dem ersten Stromrichter SR1 verbunden. Dieser ist über zwei Phasen mit den ersten Zwischenkreiskomponenten ZK1 verbunden, wobei diese Verbindung mittels niederinduktiver Zwischenkreisschienen $+S_{ZK1}$, $-S_{ZK1}$, $+S'_{ZKl}$, $-S'_{ZK1}$ gebildet ist. Zweiphasige Verbindungselemente V verbinden die ersten Zwischenkreiskomponenten ZK1 mit den zweiten Zwischenkreiskomponenten ZK2. Diese sind wiederum mit zwei Phasen an den zweiten Stromrichter SR2 geschaltet. Am Ausgang des zweiten Stromrichters SR2 liegt mit drei Phasen ein Drehstromnetz N an.

Die Erfindung ist dabei nicht auf ein Drehstromsystem begrenzt. Eine entsprechende Frequenzumrichteranordnung ist auch in einphasigen oder anderen mehrphasigen Systemen nutzbar.

Zudem ist auch vorgesehen, bei Bedarf mehr als zwei Module zusammenzuschließen. Dabei bilden die mehreren Stromrichtern zugeordneten Zwischenkreiskomponenten einen gemeinsamen Zwischenkreis. In einem Generatorbetrieb überträgt beispielsweise ein als Gleichrichter arbeitender Stromrichter Energie in den gemeinsamen Zwischenkreis, aus dem über mehrere Stromrichter verschiedene Netze oder Verbraucher versorgt werden. Dabei können selbstverständlich auch mehrere als Gleichrichter arbeitende Stromrichter Energie in den gemeinsamen Zwischenkreis übertragen.

Die zusammengeschlossenen Module M1, M2 werden mittels einer nicht dargestellten Gerätesteuerung angesteuert. In der Regel sind Schaltelemente der Stromrichter mittels einer Pulsweitenmodulation angesteuert. Die Taktfrequenz bestimmt dabei die Anregungsfrequenz, mit der der Zwischenkreisschwingkreis angeregt wird. Eine Anregung erfolgt bei jeder abfallenden und bei jeder ansteigenden Flanke eines Schaltsignals.

Das in Fig. 2 dargestellte Ersatzschaltbild fasst vereinfacht die kapazitiven Zwischenkreiskomponenten des ersten Moduls M1 zu einer ersten Kondensatoreinheit $C_{ZK1}$ und die kapazitiven Zwischenkreiskomponenten des zweiten Moduls M2 zu einer zweiten Kondensatoreinheit $C_{ZK2}$ zusammen.

Die induktiven Anteile der Verbindungselemente V sind ersatzweise als Zwischenkreisinduktivitäten $L_V$ dargestellt. Die Größe dieser Zwischenkreisinduktivitäten $L_V$ hängt von der Ausgestaltung der Verbindungselemente V und von parasitären Induktivitäten der Kondensatoreinheiten $C_{ZK1}$, $C_{ZK2}$ ab.

Als Resonanzfrequenz dieses Zwischenkreis-Schwingungskreises erhält man:

$$f_{res} = 1 / (2 \cdot \pi \cdot \sqrt{(2 \cdot L_V/(1/C_{ZK1}+1/C_{ZK2})})$$

wobei $L_V$ die Induktivität einer Phase der Zwischenkreisverbindung und $C_{ZK1}$ bzw. $C_{ZK2}$ die Kapazität der jeweiligen Kondensatoreinheit ist.

Bei der Gestaltung der die Induktivitäten bestimmenden Verbindungselemente V wird zunächst von der bekannten Schaltfrequenz ausgegangen. Diese richtet sich im Wesentlichen nach der Dimensionierung netzseitiger Filter. Wirtschaftliche kleine Filter bedingen dabei eine hohe Schaltfrequenz. Die Schaltfrequenz bestimmt die zu erwartenden Frequenz, mit der der Zwischenkreis-Schwingkreis angeregt wird.

Die Verbindungselemente V werden in der Weise gestaltet, das sich Induktivitäten ergeben, welche gemeinsam mit den Kapazitäten des Zwischenkreises eine Resonanzfrequenz bewirken, welche ausreichend entfernt ist von den zu erwartenden Anregungsfrequenzen. Wird der Abstand zwischen einer Anregungsfrequenz und der Resonanzfrequenz zu gering gewählt, wird der Gleichstrom im Zwischenkreis von einem hohen Wechselstrom überlagert, welcher zu einer unzulässigen Erwärmung der Zwischenkreiskomponenten bis hin zu deren Zerstörung führt.

Vorteilhaft ist es daher, die Resonanzfrequenz so hoch anzusetzen, dass alle möglichen Anregungsfrequenzen deutlich unterhalb liegen.

Für eine möglichst hohe Resonanzfrequenz müssen die Induktivitäten des Zwischenkreises sehr klein sein. Dies wird durch eine niederinduktive Verbindung der Zwischenkreiskomponenten des ersten und des zweiten Moduls M1, M2 erreicht.

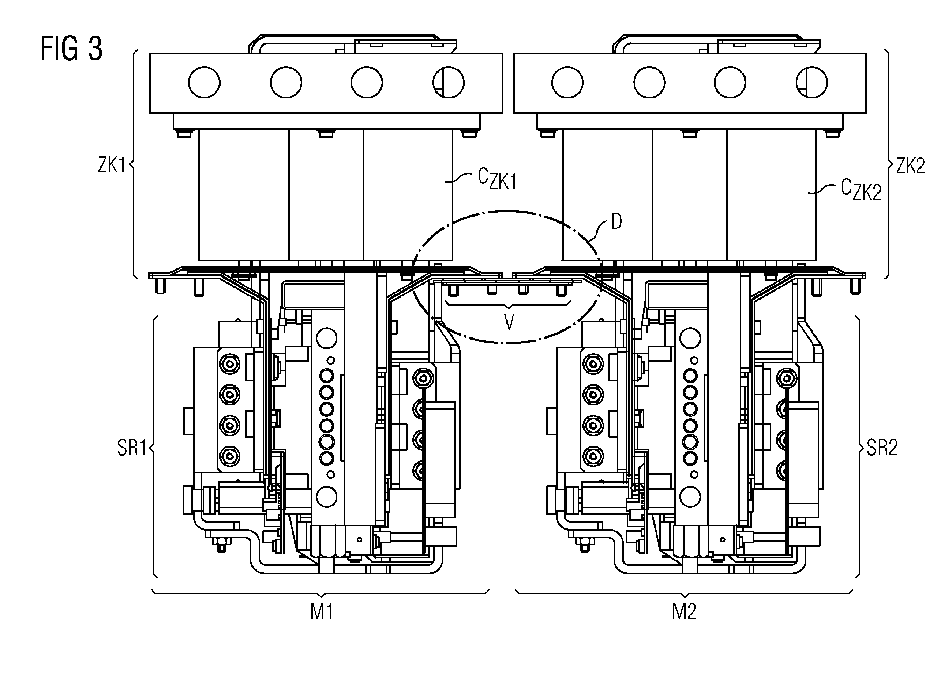

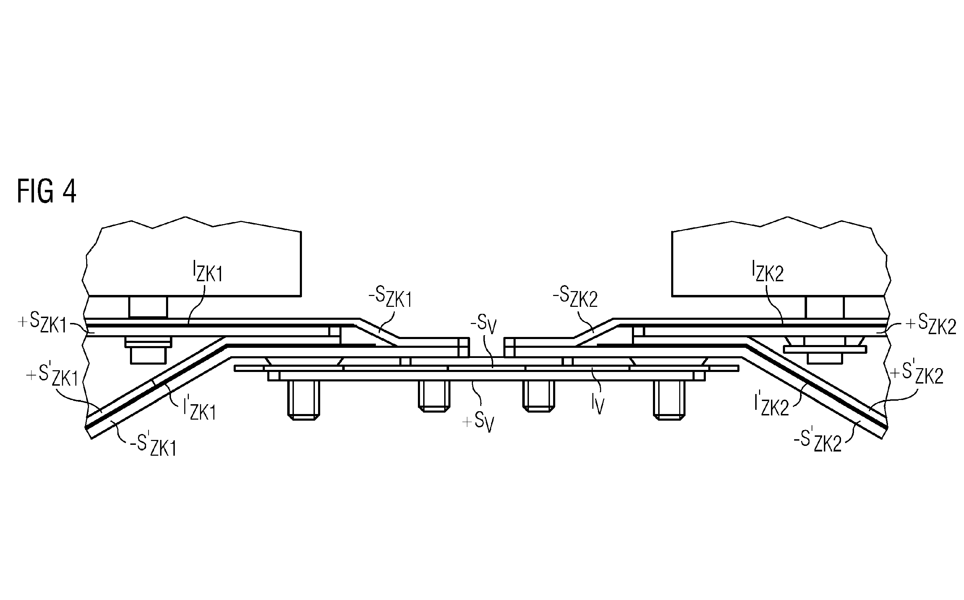

Eine beispielhafte Ausführung einer Frequenzumrichteranordnung mit niederinduktiver Verschienung ist in den Figuren 3 und 4 dargestellt. Fig. 3 zeigt die Frequenzumrichteranordnung bei üblicher Einbaulage in Aufsicht. Die Frequenzumrichteranordnung umfasst zwei Module M1, M2, welche mittels Verbindungselemente V verbunden sind. Eine Detailansicht der Verbindungselemente V ist in Fig. 4 dargestellt.

Jedes Modul M1, M2 besteht aus einem Stromrichter SR1, SR2 und jeweils zugeordneten Zwischenkreiskomponenten ZK1, ZK2. Die Zwischenkreiskomponenten ZK1 bzw. ZK2 eines Moduls M1 bzw. M2 umfassen eine Kondensatoreinheit $C_{ZK1}$ bzw. $C_{ZK2}$, welche aus mehreren nebeneinander und hintereinander versetzt angeordneten Kondensatoren besteht. Die Kondensatoren sind günstigerweise Polypropylenkondensatoren zylindrischer Bauart, welche mittels Schraubterminals mit der jeweiligen Zwischenkreisschiene verbunden sind. Polypropylenkondensatoren weisen eine sehr kleine parasitäre Induktivität auf und tragen deshalb dazu bei, dass die Induktivität des Zwischenkreises insgesamt gering bleibt.

Eine gleichmäßige Anordnung der Kondensatoren und eine gute Kontaktierung sorgen dabei für eine gleichmäßige Stromverteilung in den Schienen. In einer Kondensatoreinheit können beispielsweise bis zu 29 Kondensatoren versetzt in drei Reihen hintereinander angeordnet sein.

In der Ansicht der Figuren 3 und 4 sind die Breitseiten der Zwischenkreisschienen $+S_{ZK1}$, $-S_{ZK1}$, $+S'_{ZK1}$, $-S'_{ZK1}$, $+S_{ZK2}$, $-S_{ZK2}$, $+S'_{ZK2}$, $-S'_{ZK2}$ sichtbar. Über die gesamten Längsseiten sind die Kondensatorschienen $+S_{ZK1}$, $-S_{ZK1}$, $+S_{ZK2}$, $-S_{ZK2}$, welche die Kondensatoren untereinander verbinden, niederinduktiv mit den Schienen $+S'_{ZK1}$, $-S'_{ZK1}$, $+S'_{ZK2}$, $-S'_{ZK2}$ zur Verbindung der Kondensatoren mit den Schaltelementen der Stromrichter SR1, SR2 verbunden.

Zwischen den einander zugeordneten positiven und negativen Schienen $+S_{ZK1}$, $S_{ZK1}$ bzw. $+S'_{ZK1}$, $-S'_{ZK1}$ bzw. $+S_{ZK2}$, $-S_{ZK2}$ bzw. $+S'_{ZK2}$, $-S'_{ZK2}$ sind Isolationsschichten $I_{ZK1}$, $I'_{ZK1}$, $I_{ZK2}$, $I'_{ZK2}$ angeordnet.

Die Verbindungselemente V zum Zusammenschießen der Zwischenkreiskomponenten ZK1, ZK2 sind ebenfalls niederinduktiv ausgeführt. Dabei sind die Zwischenkreisschienen $+S_{ZK1}$, $-S_{ZK1}$, $+S'_{ZK1}$, $-S'_{ZK1}$, $+S_{ZK2}$, $-S_{ZK2}$, $+S'_{ZK2}$, $-S'_{ZK2}$ der beiden Module M1, M2 an jeweils einer Längsseite über die gesamte Länge mit einer positiven Verbindungsschiene $+S_V$ und einer negativen Verbindungsschienen $-S_V$ verbunden.

Die negative Verbindungsschiene $-S_V$ ist mit den negativen Zwischenkreisschienen $-S_{ZK1}$, $-S'_{ZK1}$, $-S_{ZK2}$, $-S'_{ZK2}$ verbunden. Dabei sind über die gesamte Länge mehrere Kontaktpunkte vorgesehen, welche vorzugsweise als Verschraubungen ausgeführt sind. Unterhalb der negativen Verbindungsschiene $-S_V$ ist die positive Verbindungsschiene $+S_V$ angeordnet, wobei die beiden Schienen $-S_V$, $+S_V$ nur durch eine Isolationsschicht $I_V$ voneinander getrennt sind.

Die positive Verbindungsschiene $+S_V$ ist mit den positiven 2wischenkreisschienen $+S_{ZK1}$, $+S'_{ZK1}$, $+S_{ZK2}$, $+S'_{ZK2}$ verbunden. Dabei sind wieder über die gesamte Länge der Schienen $+S_V$, $+S_{ZK1}$, $+S'_{ZK1}$, $+S_{ZK2}$, $+S'_{ZK2}$ Verschraubungen als Kontaktstellen vorgesehen. Die negative Verbindungsschiene $-S_V$ ist schmäler als die positive Verbindungsschiene $+S_V$ ausgeführt, sodass die positiven Kontaktstellen außerhalb der negativen Verbindungsschiene $-S_V$ liegen. Im Bereich der positiven Kontaktstellen ist die positive Verbindungsschiene $+S_V$ durchbrochen. Entsprechende Durchbrüche der Zwischenkreisschienen $+S_{ZK1}$, $-S_{ZK1}$, $+S'_{ZK1}$, $-S'_{ZK1}$, $+S_{ZK2}$, $-S_{ZK2}$, $+S'_{ZK2}$, $-S'_{ZK2}$ befinden sich an den Stellen, an denen sich jeweils anders gepolte Kontaktierungen befinden.

Selbstverständlich sind die dargestellten Verschienungen auch mit vertauschter Polung ausführbar.

Alternativ zu dem in den Figuren 3 und 4 dargestellten Aufbau können auch andere Verbindungsausführungen zum Einsatz kommen. Im Wesentlichen ist für eine niederinduktive Verschienung wichtig, dass eine gute Kontaktierung der gleichgepolten Schienen gegeben ist und dass die ungleich gepolten Schienen mit einer dazwischen angeordneten Isolierschicht einander flächig angenähert sind. Beispielsweise können an den Längsseiten der Zwischenkreisschienen Verschienungsabschnitte ausgebildet sein, welche zu einer niederinduktiven Verschienung zusammengeschlossen werden.

Bei einer Kombination von mehr als zwei Modulen werden die Module entweder nebeneinander oder übereinander angeordnet. Bei einer Anordnung mehrerer Module übereinander erfolgt die Verbindung der Zwischenkreisschienen mittels entsprechend verlängerter Verbindungsschienen.

**Patentansprüche**

1. Frequenzumrichteranordnung für einen Vierquadrantenbetrieb mit einem ersten Stromrichter (SR1), einem zweiten Stromrichter (SR2) und einem gemeinsamen Zwischenkreis (ZK), **dadurch gekennzeichnet, dass** ein erstes Modul (M1) vorgesehen ist, das aus dem ersten Stromrichter (SR1) mit zugeordneten ersten Zwischenkreiskomponenten (ZK1) gebildet ist, dass ein zweites Modul (M2) vorgesehen ist, das aus dem zweiten Stromrichter (SR2) mit zugeordneten zweiten Zwischenkreiskomponenten (ZK2) gebildet ist und dass die ersten Zwischenkreiskomponenten (ZK1) und die zweiten Zwischenkreiskomponenten (ZK2) mittels Verbindungselemente (V) zu dem gemeinsamen Zwischenkreis (ZK) zusammengeschlossen sind.

2. Frequenzumrichteranordnung nach Anspruch 1 **dadurch gekennzeichnet, dass** die Verbindungselemente (V) als eine niederinduktive Verschienung ausgebildet sind.

3. Frequenzumrichteranordnung nach Anspruch 2, **dadurch gekennzeichnet, dass** kapazitive Zwischenkreiskomponenten als Folienkondensatoren, insbesondere als Polypropylenkondensatoren, ausgebildet sind.

4. Frequenzumrichteranordnung nach einem der Ansprüche 1 bis 3, **dadurch gekennzeichnet, dass** die ersten Zwischenkreiskomponenten (ZK1) eine erste Kondensatoreinheit ($C_{ZK1}$), eine erste negative Zwischenkreisschiene ($-S_{ZK1}$) und eine erste positive Zwischenkreisschiene ($+S_{ZK1}$) umfassen, dass die zweiten Zwischenkreiskomponenten (ZK2) eine zweite Kondensatoreinheit ($C_{ZK2}$), eine zweite negative Zwischenkreisschiene ($-S_{ZK2}$) und eine zweite positive Zwischenkreisschiene ($+S_{ZK2}$) umfassen, dass die negativen Zwischenkreisschienen ($-S_{ZK1}$, $-S_{ZK2}$) mittels eines negativen Verschienungsabschnitts verbunden sind, dass die positiven Zwischenkreisschienen ($+S_{ZK1}$, $+S_{ZK2}$) mittels eines positiven Verschienungsabschnitts verbunden sind und dass die beiden Verschienungsabschnitte mit einer dazwischen angeordneten Isolationsschicht ($I_V$) einander flächig angenähert sind.

5. Frequenzumrichteranordnung nach Anspruch 4, **dadurch gekennzeichnet, dass** der negative Verschienungsabschnitt als eine negative Verbindungsschiene ($-S_V$) ausgebildet ist, welche mit der ersten negativen Zwischenkreisschiene ($-S_{ZK1}$) und der zweiten negativen Zwischenkreisschiene ($-S_{ZK2}$) kontaktiert ist und dass der positive Verschienungsabschnitt als eine positive Verbindungsschiene ($+S_V$) ausgebildet ist, welche mit der ersten positiven Zwischenkreisschiene ($+S_{ZK1}$) und der zweiten positiven Zwischenkreisschiene ($+S_{ZK2}$) kontaktiert ist.

6. Frequenzumrichteranordnung nach Anspruch 5, **dadurch gekennzeichnet, dass** die Zwischenkreisschienen ($+S_{ZK1}$, $-S_{ZK1}$, $+S'_{ZK1}$, $-S'_{ZK1}$, $+S_{ZK2}$, $-S_{ZK2}$, $+S'_{ZK2}$, $-S'_{ZK2}$) und die Verbindungsschienen ($+S_V$, $-S_V$) mittels mehrerer Verschraubung zu einer Verschienung verbunden sind.

7. Frequenzumrichteranordnung nach einem der Ansprüche 4 bis 6, **dadurch gekennzeichnet, dass** das jede Kondensatoreinheit ($C_{ZK1}$, $C_{ZK2}$) aus mehreren Kondensatoren aufgebaut ist.

8. Frequenzumrichteranordnung nach Anspruch 7, **dadurch gekennzeichnet, dass** das die Kondensatoren mittels Schraubterminals auf den Zwischenkreisschienen ($+S_{ZK1}$, $-S_{ZK1}$, $+S_{ZK2}$, $-S_{ZK2}$) befestigt sind.

9. Frequenzumrichteranordnung nach einem der Ansprüche 4 bis 8, **dadurch gekennzeichnet, dass** die Zwischenkreisschienen ($+S_{ZK1}$, $-SZK_1$, $+S'_{ZK1}$, $-S'_{ZK1}$, $+S_{ZK2}$, $-S_{ZK2}$, $+S'_{ZK2}$, $-S'_{ZK2}$) als laminierte Schienen ausgeführt sind.

10. Frequenzumrichteranordnung nach Anspruch 9, **dadurch gekennzeichnet, dass** die einzelnen Lagen der laminierten Schienen ($+S_{ZK1}$, $-S_{ZK1}$, $+S'_{ZK1}$, $-S'_{ZK1}$, $+S_{ZK2}$, $-S_{ZK2}$, $+S'_{ZK2}$, $-S'_{ZK2}$) als vernickelte Kupferbleche ausgebildet sind.

FIG 1

FIG 2

FIG 3

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004003657 A1
- EP 2003770 A2